# DEMANDE DE BREVET EUROPEEN

(11) **EP 1 447 196 A1**
(43) Date de publication de la demande: **18.08.2004**
(21) Numéro de dépôt: 04290284.1
(22) Date de dépôt: 04.02.2004
(51) Int. Cl.: B29B 17/00, B09B 3/00, C08J 11/04, E01C 3/00

(54) **Procédé de recyclage de matériaux plastiques**

(30) Priorité: 13.02.2003 FR 0301737
(71) Demandeur: Chometon, Louis, 75017 Paris (FR)
(72) Inventeur: Chometon, Louis, 75017 Paris (FR)
(74) Mandataire: Schwartz, Thierry J.

(57) **Abrégé**

L'invention vise à permettre le recyclage des objets manufacturés de matériaux plastiques, qu'ils soient rigides, semi-rigides ou souples, tels que par exemple les différents accessoires informatiques.

Pour ce faire, l'invention propose de traiter les plastiques contenus dans les objets manufacturés pour les réduire à un format calibré, de les mélanger à d'autres produits de recyclage et enfin de les additionner à un liant de base d'application BTP prédéterminée. Plus précisément, l'invention consiste à traiter les déchets d'objets manufacturés contenant une proportion minimale de matériaux plastiques rigides, semi-rigides et souples, par broyage, séparation et calibrage pour les réduire selon un format prédéterminé, pour former des granulats, puis à mélanger ces granulats à un support constitué d'autres produits issus du recyclage ou neufs, en y ajoutant éventuellement un liant selon le type d'application envisagée choisie parmi les constructions du bâtiment et des travaux publics, pour former des granulats, et à additionner les granulats à un liant de base de matériau BTP, pour former une sous-couche ou matériau ou un module de construction d'application BTP.

## Description

L'invention se rapporte à un procédé de recyclage de matériaux plastiques rigides et semi-rigides, voire souples, ainsi qu'au substitut de granulat obtenu à partir d'un tel procédé, à la sous-couche et au matériau appliqué aux constructions de type BTP (Bâtiment et Travaux Publics) comportant un tel substitut.

Le recyclage par la valorisation de matériaux plastiques destinés au rebut a déjà fait l'objet de nombreuses applications du fait des quantités croissantes de matériaux plastiques rejetés et directement inutilisables, notamment du fait du renouvellement périodique du matériel informatique.

Certaines de ces techniques utilisent des régénérateurs pour transformer ces matériaux en matière plastique secondaire pouvant être utilisée dans la fabrication de nouveaux objets en plastique. En France par exemple, ces techniques recyclent approximativement 20 % des déchets produits. Cependant elles ne peuvent recycler que des déchets dont la composition est parfaitement connue et homogène pour garantir la qualité de la matière première secondaire utilisée.

Des techniques ont essayé de réutiliser des déchets en matériaux plastiques divers. Par exemple, le document de brevet US 5,422,051, prévoit la réduction en particules de matériaux plastiques durs provenant d'une source de déchets. Ces particules sont combinées à un liant, de type ciment de Portland, et à une charge, de type pierre, gravier ou sable, pour former, après addition d'eau et traitement thermique, un produit de construction ayant les propriétés du ciment.

Un tel matériau ne convient pas pour former un substitut de gravier, une sous-couche ou matériau dans les applications BTP. De plus, il résulte d'un traitement des déchets en matériau plastique dur, ce qui exclut le recyclage des matériaux plastiques semi-rigides et souples.

Au contraire, l'invention vise à valoriser l'ensemble des déchets plastiques dont la composition chimique est inhomogène, et notamment tous les déchets qui sont aujourd'hui considérés comme non réutilisables et contiennent une part significative de matière plastique, ainsi que les rebuts de fabrication produites par les industries de la plasturgie.

Ces déchets sont actuellement soit incinérés soit portés dans des centres d'enfouissement technique. L'invention permet donc de recycler les objets manufacturés de ce type, qu'ils soient composés en tout ou partie de plastiques rigides, semi-rigides ou souples, tels que les biens d'équipement électriques, électroniques ou informatiques, d'outillage, par exemple des câbles, mobiliers, composants plastiques, emballages, etc.. Les produits ne réalisant pas d'objets manufacturés, tels que les structures en polystyrène expansé ou les films de protection sont exclus du champ de la présente invention.

Un autre but de l'invention est de fournir un matériau de base adaptable à une application BTP envisagée par un traitement dédié, permettant l'obtention d'un matériau allégé par rapport au matériau classiquement utilisé pour cette application, c'est-à-dire de densité diminuée, avec l'acquisition de certaines caractéristiques physiques telles que la résistance mécanique, la souplesse, ou l'isolation phonique et thermique.

Pour atteindre ces objectifs, l'invention propose de traiter les plastiques contenus dans les objets manufacturés mis au rebut pour les réduire à un format calibré et former un granulat de plastique, puis de les soumettre à des opérations de transformation avec d'autres supports, issus du recyclage ou non (neufs), avec l'addition optionnel d'un liant, pour être utilisé dans une application BTP, c'est-à-dire une construction du Bâtiment ou des Travaux Publics.

Plus précisément, l'invention a pour objet un Procédé de recyclage de matériaux plastiques rigides, semi-rigides et souples, caractérisé en ce qu'il consiste à traiter, dans une première étape, les déchets d'objets manufacturés contenant une proportion minimale en matériaux plastiques rigides, semi-rigides et souples, par broyage, séparation et calibrage pour former des granulats de plastique réduits selon un format prédéterminé, puis à traiter ces granulats par mélange, dans une deuxième étape, à un support et/ou un produit de liaison additionné(s) au moins d'eau, en quantités adaptées pour les transformer en un produit apte à fournir par étalement, damage ou moulage, un matériau allégé propre à une application BTP déterminée.

Selon différents modes de réalisation particuliers :
- les déchets de matériaux plastiques traités dans la première étape proviennent d'un tri des collectes sélectives et/ou de l'industrie, et sont issus d'équipements électriques ou électroniques (en abrégé DEEE), de mobiliers, de véhicules, de câbles, et/ou de fournitures industrielles (palettes, emballages, etc.) ;
- le produit étalé et damé est utilisé en fond de forme ou sous-couche dans des applications BTP et le produit moulé est utilisé sous forme modulaire de construction dans des application du type Bâtiment ;
- le produit de liaison est du type ciment, chaux, huiles minérales, asphaltes et/ou bitumes ;
- le support est un produit recyclé dans les applications du type Travaux Publics ;
- le produit recyclé est du type MIOM (mâchefers issus des ordures ménagères dits MIOM, cendres volantes, etc.), scories, sable de fonderie, déchets fins, provenant de l'incinération et de l'industrie ;
- une sous-couche allégée pour route ou plate-forme est réalisée par mélange des granulats au support avec addition d'eau en quantité limitée, avant d'être étalé et damé en fond de forme ;
- le fond de forme de sol est additionné, lors de la deuxième étape, d'un liant choisi parmi un ciment, de la chaux, une huile minérale, de l'asphalte et du bitume pour présenter des caractéristiques de résistance améliorée ;
- une sous-couche allégée pour route ou plate-forme est réalisée par émulsion d'un mélange de granulats et d'un liant d'huiles minérales puis addition d'eau et d'air pour présenter des qualités améliorées d'isolation phonique et thermique ;
- le support est un sable minéral dans les applications du type Bâtiment ;
- le support de sable minéral est additionné d'un liant de ciment ordinaire et d'eau en quantités juste suffisantes avant d'être étalé en sous-couche, pour présenter des qualités améliorées d'isolation phonique et thermique ;
- le support de sable minéral est de qualité supérieure et est additionné d'un liant de ciment de première qualité et d'eau en quantité adaptée pour former un mélange homogène pour présenter des qualités améliorées d'isolation phonique et thermique, ce mélange étant ensuite mis en moule, mis en vibration, laissé au repos puis démoulé pour former un produit modulaire allégé ;
- des armatures sont insérées au mélange mis en moule pour réaliser un béton armé.

L'invention concerne également le granulat obtenu avant addition d'un support adapté à l'application visée, ainsi que la sous-couche et le module d'application BTP obtenus après mélange des granulats au support et traitement pour former un matériau propre à l'application BTP visée, se présentant en fonds de forme, en dalles, parpaing, etc.

D'autres caractéristiques et avantages de l'invention ressortiront de la description ci-après d'un exemple de réalisation détaillé, illustré par les figures annexées qui représentent respectivement :
- la figure 1, un organigramme illustrant les étapes d'obtention des granulats selon l'invention à partir de différents types de déchets ;
- la figure 2, un organigramme exposant les étapes pour l'obtention d'une sous-couche de revêtement de route ou plate-forme, selon des exemples d'application de type TP ; et
- la figure 3, un organigramme exposant les étapes d'obtention de modules de construction selon des exemples d'application du Bâtiment.

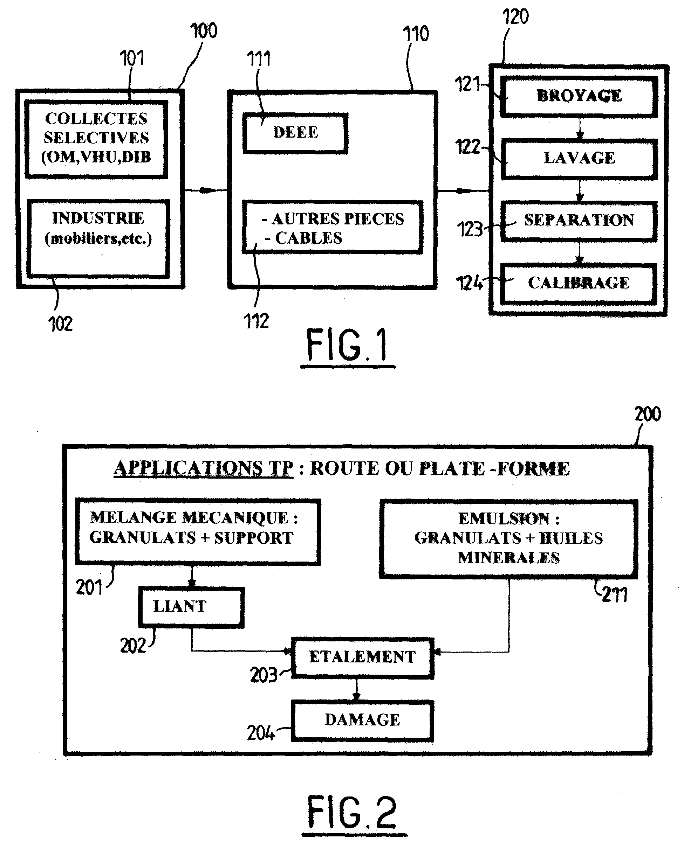

Comme il apparaît sous la référence 110 de la figure 1, la matière première utilisée, pour réaliser les granulats dans les exemples qui suivent, provient de déchets de DEEE (Equipements Electriques : matériel de jardin, de bricolage, ménager, etc., et Electroniques : équipements informatiques, télécommunication, centrales de commande, câbles, etc.) en référence 111, et plus particulièrement d'équipements informatiques de type claviers, écrans, unités centrales et gaines de câble, provenant (référence 100) d'un tri de Collectes Sélectives ou de l'Industrie. Les collectes sélectives (référence 101) regroupent une partie des rebuts ménagers (Ordures Ménagères, OM en abrégé), des Véhicules Hors d'Usage (VHU) et des Déchets Industriels Banals (DIB). Les déchets peuvent provenir également, alternativement ou concomitamment, d'un tri de rebuts de fabrication ou de chutes issus de l'Industrie (référence 102), notamment de l'industrie plasturgique. Les Collectes et l'Industrie peuvent fournir également (référence 112) d'autres pièces en matériau plastique (parties de mobiliers, de véhicules, de petites fournitures industrielles, etc.) ou de câbles, à partir de la même provenance 100.

Il s'agit donc de produits manufacturés à base de thermoplastiques dures ou semi-rigides (plastiques rigides dérivés du polystyrène, du styrène - acrylonitrile ou équivalents), ou encore de thermoplastiques souples (tel que du styrène - butadiène ou équivalent).

Les produits récupérés peuvent être avantageusement, suivant leur provenance, extraits ou séparés pour pouvoir être traités. Ces séparations et extractions sont effectuées par un intermédiaire du recyclage. Par exemple, les parties plastiques des véhicules (terrestres ou aériens) sont séparées et les gaines de câbles sont extraites des conducteurs métalliques. Les procédés de séparation sont choisis entre la séparation magnétique, par exemple par courants de Foucault, la séparation densimétrique en solution aqueuse, la séparation gravimétrique ou le lavage pour l'entraînement des fines.

Une entreprise de recyclage transforme ensuite les déchets (référence 120), ici les déchets plastiques de DEEE, par broyage, lavage, séparation et calibrage comme indiqué sous les références 121 à 124. Le lavage est optionnel, en fonction de l'origine du tri. Les transformations sont réalisées par des broyeurs, cribleurs et calibreurs, connus des entreprises spécialisées dans le recyclage des déchets.

Plus particulièrement, le criblage est réalisé par séparation des plastiques broyés, à l'aide d'une extraction des métaux par induction magnétique et d'une dépollution par lavage et filtrage à l'aide d'un solvant approprié, tel que le trichloréthylène, pour isoler les matériaux polluants, solides ou fluides. Alternativement ou successivement, la séparation peut être opérée par densimétrie.

Après un nouveau broyage éventuel des plastiques propres extraits, une granulométrie permet de réaliser le calibrage approprié pour obtenir des granulats, de dimension inférieure à 50 mm dans le présent exemple. Dans d'autres cas, les granulats peuvent être calibrés de dimension inférieure à 30 ou à 15 mm. Il est également utile, à ce stade, de réaliser le cas échéant une résorption des poussières et une dépollution des résidus liquides.

Les granulats forment un matériau homogène, de type substitut de gravier. Le produit obtenu est une Matière Première Secondaire conditionnée en vrac ou en sac, suivant le site d'exploitation de l'application finale : soit en phase finale, par exemple sur le chantier, soit en production, par exemple en centrale de traitement des matériaux. Dans une centrale de production, l'acheminement peut être effectué par tapis transporteur sur lequel peuvent s'ajouter, directement et successivement, les matériaux additionnels, comme précisé ci-après dans plusieurs exemples.

Les granulats conditionnés sont ensuite traités par le maître d'oeuvre utilisateur de l'application BTP envisagée. Comme indiqué en référence à la figure 2 relative à des premiers exemples d'application de type TP (référence 200), ce traitement consiste, dans une première étape 201, à mélanger mécaniquement les granulats à des produits recyclés servant de matériau support, tels que des MIOM, des scories, des sables de fonderie ou des déchets fins. Le mélange est malaxé avec une quantité d'eau dans des proportions connues de l'homme du métier, pour obtenir un produit prêt à être étalé.

Par exemple pour former un fond de forme allégé pour route ou plate-forme, les granulats sont traités par mélange mécanique à un support constitué de MIOM mouillés. Lorsque des qualités de résistance mécanique améliorées sont recherchées pour le fond de forme, un liant 202, ici de ciment, est avantageusement additionné en quantités juste nécessaires. D'autres liants, tels que de la chaux, des huiles minérales, des asphaltes et/ou des bitumes peuvent être utilisés. Le fond est réalisé par étalement 203 puis damage 204 pour former une sous-couche du revêtement routier.

Dans d'autres exemples de réalisation d'un fond de forme routier, pour lequel des caractéristiques d'absorption phonique et d'isolation thermique améliorées sont souhaitées, le traitement consiste à effectuer une émulsion 211 des granulats dans une huile minérale, alternativement ou éventuellement après un mélange mécanique avec des produits recyclés. L'émulsion est conduite par addition d'eau et d'air dans des proportions adaptées par l'homme du métier, avant de procéder à l'étalement 203 et au damage 204 de l'ensemble pour. former une sous-couche de revêtement routier.

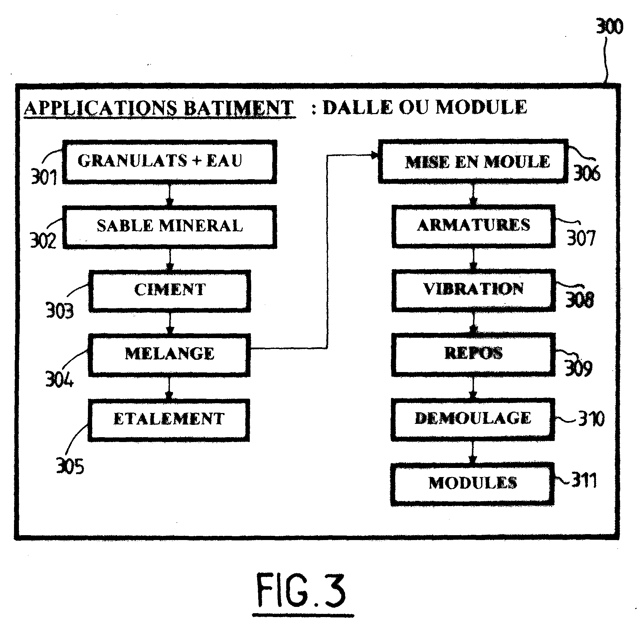

Dans des applications de type B en référence 300 de la figure 3, concernant le domaine du Bâtiment, les granulats sont mélangés à un matériau support, tel que des déchets fins, des sables minéraux et/ou du ciment.

Par exemple, pour réaliser des dalles de sol, des sous-couches de « béton maigre » allégées sont formées, à partir de granulats mouillés 301 avec une quantité d'eau juste suffisante pour former *in fine* un mélange 304 prêt à l'étalement 305, après addition de sable minéral 302 et du ciment ordinaire 303 utilisé comme liant, en quantité également juste suffisante. Les proportions respectent celles utilisées habituellement lorsqu'il s'agit d'ajouter du gravier aux matériaux de BTP. De telles dalles forment un dallage qui présente de bonnes qualités d'isolation phonique et thermique.

Pour obtenir, notamment dans le domaine plus particulier de la construction, du béton armé sous forme de modules allégés 310, le sable minéral 302 utilisé est de première qualité et lavé avant mélange, le ciment 303 est également de première qualité, et la quantité d'eau utilisée est la quantité nécessaire pour obtenir un mélange homogène 304. Une mise en moule 306 est réalisée avec insertion d'armatures de fer 307 d'armement. Les modules sont obtenus après mise en vibration 308, temporisation de repos 309, pour que la prise se fasse en masse, avant démoulage 310. Les modules obtenus 311 présentent des qualités d'isolation phonique et thermique accrues.

Il est également possible de réaliser des modules en béton non armé, sans insertion d'armatures 307, par exemple pour former des parpaings allégés.

L'invention n'est pas limitée aux exemples de réalisation décrits ci-dessus. Ainsi la phase de séparation peut être également réalisée par densimétrie ou gravimétrie. De plus, l'ensemble des opérations d'addition aux matériaux du BTP pour l'utilisation visée, peut être entièrement automatisé. Les caractéristiques d'isolation phonique, thermique, de résistance, de renforcement et de souplesse peuvent être soit alternatives soit combinées par combinaison des supports de mélange des granulats décrits dans les exemples précédents.

Les applications concernent plus particulièrement, mais non exclusivement, les routes, pistes ou plates-formes, et tout revêtement de sol pouvant nécessiter souplesse et robustesse, réalisé en couches par les entreprises de type TP, ou des éléments manufacturés en module de construction par coffrage ou sous forme de bloc (dalles, parpaings, béton allégé, etc.) pour les entreprises du Bâtiment.

## Revendications

1. Procédé de recyclage de matériaux plastiques rigides, semi-rigides et souples, **caractérisé en ce qu'**il consiste à traiter, dans une première étape (120), les déchets d'objets manufacturés (111,112) contenant une proportion minimale en matériaux plastiques rigides, semi-rigides et souples, par broyage (121), séparation (123) et calibrage (124) pour former des granulats de plastique réduits selon un format prédéterminé, puis à traiter ces granulats par mélange, dans une deuxième étape (200), à un support (201) et/ou un produit de liaison (202) additionné(s) au moins d'eau, en quantités adaptées pour les transformer en un produit apte à fournir par étalement (203), damage (204) ou moulage (306), un matériau allégé propre à une application BTP déterminée.

2. Procédé de recyclage selon la revendication 1, dans lequel les déchets de matériaux plastiques traités dans la première étape proviennent d'un tri (100) des collectes sélectives et/ou de l'industrie, et sont issus d'équipements électriques ou électroniques, de mobiliers, de véhicules, de câbles, et/ou de fournitures industrielles.

3. Procédé de recyclage selon la revendication 1 ou 2, dans lequel le produit étalé et damé est utilisé en fond de forme ou sous-couche dans des applications BTP et le produit moulé est utilisé sous forme modulaire de construction dans des application du type Bâtiment.

4. Procédé de recyclage selon l'une quelconque des revendications précédentes, dans lequel le produit de liaison (202) est du type ciment, chaux, huiles minérales, asphaltes et/ou bitumes.

5. Procédé de recyclage selon la revendication précédente, dans lequel le support est un produit recyclé dans les applications du type Travaux Publics (200).

6. Procédé de recyclage selon la revendication précédente, dans lequel le produit recyclé est du type MIOM, scories, sable de fonderie, déchets fins, provenant de l'incinération et de l'industrie.

7. Procédé de recyclage selon la revendication précédente, dans lequel une sous-couche allégée pour route ou plate-forme est réalisée par mélange mécanique (201) des granulats au support avec addition d'eau en quantité limitée, avant d'être étalé et damé en fond de forme.

8. Procédé de recyclage selon la revendication précédente, dans lequel le fond de forme de sol est additionné, lors de la deuxième étape (200), d'un liant (202) choisi parmi un ciment, de la chaux, une huile minérale, de l'asphalte et du bitume pour présenter des caractéristiques de résistance améliorée.

9. Procédé de recyclage selon la revendication 4 ou 5, dans lequel une sous-couche allégée pour route ou plate-forme est réalisée par émulsion (211) d'un mélange de granulats et d'un liant d'huiles minérales puis addition d'eau et d'air pour présenter des qualités améliorées d'isolation phonique et thermique.

10. Procédé de recyclage selon la revendication 4, dans lequel le support est un sable minéral (302) dans les applications du type Bâtiment (300).

11. Procédé de recyclage selon la revendication précédente, dans lequel le support de sable minéral est additionné d'un liant de ciment (303) ordinaire et d'eau en quantités juste suffisantes avant d'être étalé en sous-couche, pour présenter des qualités améliorées d'isolation phonique et thermique

12. Procédé de recyclage selon la revendication 10, dans lequel le support de sable minéral est de qualité supérieure et est additionné d'un liant de ciment (303) de première qualité et d'eau en quantité adaptée pour former un mélange (304) homogène pour présenter des qualités améliorées d'isolation phonique et thermique, ce mélange étant ensuite mis en moule (306), mis en vibration (308), laissé au repos (309) puis démoulé (310) pour former un produit modulaire allégé (311).

13. Procédé de recyclage selon la revendication 12, dans lequel des armatures sont insérées (307) au mélange mis en moule (306) pour réaliser un béton armé.

14. Granulat formé par traitement des déchets d'objets manufacturés, **caractérisé en ce que** ces déchets contiennent une proportion minimale en matériaux plastiques rigides, semi-rigides et souples, provenant d'un tri des collectes sélectives ou de l'industrie (100) et issus d'équipements électriques ou électroniques, de mobiliers, de véhicules, de câbles, et/ou de fournitures industrielles, et **en ce que** les granulats sont obtenus (110) par broyage, séparation et calibrage de ces déchets pour les réduire selon un format prédéterminé en fonction du type d'application envisagée choisie parmi les constructions du bâtiment et des travaux publics conformément à l'une quelconque des revendications 2 à 13.

15. Sous-couche d'application du domaine BTP formée par l'application du procédé selon l'une quelconque des revendications 7 à 9.

16. Module de construction du domaine du Bâtiment formé par l'application du procédé selon la revendication 12 ou 13.
